# EUROPEAN PATENT SPECIFICATION

(11) **EP 3 112 677 B1**
(45) Date of publication and mention of the grant of the patent: **17.10.2018**
(21) Application number: 15191996.6
(22) Date of filing: 29.10.2015
(51) Int. Cl.: F03D 9/00, F16H 61/421, F16H 61/47

(54) **POWER GENERATING APPARATUS OF RENEWABLE-ENERGY TYPE, MOTOR CONTROLLER, AND METHOD OF OPERATING POWER GENERATING APPARATUS OF RENEWABLE-ENERGY TYPE**
STROMERZEUGUNGSVORRICHTUNG FÜR ERNEUERBARE ENERGIEN, MOTORSTEUERUNG UND VERFAHREN ZUM BETRIEB EINER STROMERZEUGUNGSVORRICHTUNG FÜR ERNEUERBARE ENERGIEN
APPAREIL DE GÉNÉRATION DE PUISSANCE À ÉNERGIE RENOUVELABLE, CONTRÔLEUR DE MOTEUR ET PROCÉDÉ D'UTILISATION D'UN APPAREIL DE GÉNÉRATION D'ÉNERGIE À ÉNERGIE RENOUVELABLE

(30) Priority: 08.06.2015 JP 2015115472
(43) Date of publication of application: 04.01.2017
(73) Proprietor: MITSUBISHI HEAVY INDUSTRIES, LTD., Tokyo 108-8215 (JP)
(72) Inventor: CALDWELL, Niall, LOTHIAN, EH20 9TB (GB); LAIRD, Stephen, LOTHIAN, EH20 9TB (GB); DUMNOV, Daniil, LOTHIAN, EH20 9TB (GB); MCCURRY, Peter, LOTHIAN, EH20 9TB (GB)
(74) Representative: Intès, Didier Gérard André

(56) References cited:
- JP-B2- 5 502 189
- JP-B2- 5 583 204
- US-A1- 2012 104 752
- US-A1- 2013 134 708

## Description

### TECHNICAL FIELD

The present disclosure relates to a power generating apparatus of renewable-energy type, a motor controller, and a method of operating a power generating apparatus of renewable-energy type.

### BACKGROUND ART

In recent years, from the perspective of preserving the global environment, power generating apparatuses of renewable-energy type such as a wind turbine generator utilizing wind power and a tidal-current generator or the like utilizing energy of tidal current, river current, or ocean current, have become widely used. Generally, in a power generating apparatus of renewable-energy type, kinetic energy of wind, tidal current, ocean current or river current is converted into rotational energy of a rotor, then the rotation energy of the rotor has its speed increased by a drivetrain, and is inputted into a generator, and thereby electric power is generated.

In such a power generating apparatus of renewable-energy type, a gear-type speed increasing unit has been conventionally used as a drivetrain. In accordance with an increase in size of the renewable-energy type power generating apparatuses, renewable-energy type power generating apparatuses equipped with a hydraulic transmission in view of weight and cost are attracting attention.

For instance, Patent Document 1 discloses a wind turbine generator using a hydraulic transmission combining a hydraulic pump driven by rotation of a rotor and a hydraulic motor connected to a synchronous generator connected to a utility grid.

In this wind turbine generator, while maintaining a state in which the synchronous generator rotates at a synchronous speed based on the frequency of the utility grid, the displacement of each of the hydraulic pump and the hydraulic motor is adjusted so that the rotation speed of the rotation shaft becomes variable in accordance with the flow velocity of wind (renewable energy). Further, in such a wind turbine generator, when a failure event such as short circuit and disconnection occurs in the utility grid and terminal voltage of the synchronous generator decreases, the displacement of the hydraulic motor is adjusted so as to reduce a difference between torque inputted from the hydraulic motor to the synchronous generator and load torque of the synchronous generator, in order to prevent step out of the synchronous generator. In other words, the displacement of the hydraulic motor is reduced.

Further, Patent Document 1 discloses adopting a hydraulic motor having a plurality of working chambers formed by a plurality of cylinders and pistons in a wind turbine generator. In this hydraulic motor, switch control is performed on a high-pressure valve and a low-pressure valve provided for each of the working chambers so as to control supply and discharge of working fluid from and to the working chambers. Further, Patent Document 1 discloses that it is possible to switch each working chamber between an active state in which the displacement is generated and an idling state (inactive state) in which the displacement is not generated by the switch control of the high-pressure valve and the low-pressure valve, and that the displacement of the hydraulic motor as a whole is adjusted by varying the ratio of the number of working chambers in the active state to the total number of working chambers.

Further relevant power generating apparatuses are disclosed in Patent Documents 2 and 3.

### Citation List

### Patent Literature

Patent Document 1: WO2012/073504A;
Patent Document 2: US2013/0134708A1;
Patent Document 3: US2012/0104752A1

### SUMMARY

In the wind turbine generator described as above in Patent Document 1, when a failure event occurs in the utility grid, the high-pressure valve and the low-pressure valve of each working chamber are controlled to reduce the ratio of the number of working chambers in the active state (i.e., to switch the working chambers from the active state to the inactive state), thereby reducing the displacement of the hydraulic motor.

However, as a result of intensive research, the present inventors found that in this kind of wind turbine generator it requires time after detection of occurrence of a failure event in the grid to reduce the displacement of the hydraulic motor substantially so that the torque inputted into the synchronous generator from the hydraulic motor decreases, and thus step out of the synchronous generator cannot be sufficiently prevented.

In view of the above issues, an object of at least one embodiment of the present invention is to provide a renewable-energy type power generating apparatus whereby it is possible to prevent step out of a generator even more securely when a failure event occurs in a utility grid.
(1) A power generating apparatus of renewable energy type according to at least one embodiment of the present invention includes a rotor configured to rotate by renewable energy, a hydraulic pump configured to be driven by the rotor to pressurize working fluid, a hydraulic motor configured to be driven by the working fluid from the hydraulic pump, a high-pressure fluid line connecting an outlet of the hydraulic pump and an inlet of the hydraulic motor and configured to supply the hydraulic motor with the working fluid pressurized by the hydraulic pump, a low pressure fluid line connecting an outlet of the hydraulic motor and an inlet of the hydraulic pump and configured to return the working fluid having flown through the hydraulic motor to the hydraulic pump, a generator connected to a grid and configured to be driven by the hydraulic motor, and a motor controller for controlling the hydraulic motor.

The hydraulic motor includes: a rotatable shaft, a plurality of pistons configured to reciprocate in conjunction with the rotatable shaft, a plurality of cylinders forming a plurality of working chambers together with the plurality of pistons, a high-pressure valve for switching a communication state between each of the working chambers and the high-pressure fluid line, and a low-pressure valve for switching a communication state between each of the working chambers and the low pressure fluid line.

The motor controller is configured to close the high-pressure valve, for at least one of the working chambers corresponding to at least one piston moving downward from a top dead center toward a bottom dead center among the plurality of pistons, before the at least one piston moving downward reaches the bottom dead center, at the time of occurrence of a failure event of the grid.

If the high-pressure valve is open while the piston is moving downward from the top dead center toward the bottom dead center in the working chamber, the piston is pressed down by the working fluid flowing into the working chamber from the high-pressure fluid line via the high-pressure valve. The working chamber with the high-pressure valve opened as described above while the piston is moving downward from the top dead center toward the bottom dead center is in the active state which contributes to the displacement of the hydraulic motor. On the other hand, if the high-pressure valve is closed as described above while the piston is moving downward from the top dead center toward the bottom dead center in the working chamber, the working chamber is in the inactive state which does not contribute to the displacement of the hydraulic motor.

If the working chamber in the active state is to be switched to the inactive state, for the working chamber with the piston moving downward from the top dead center toward the bottom dead center, waiting for the high-pressure valve to close until the piston reaches the bottom dead center leads to generation of motor torque for a period until the piston reaches the bottom dead center and the high-pressure valve closes.

Thus, even if each cylinder is switched to the inactive state to reduce the displacement of the hydraulic motor upon occurrence of a failure event of the grid, the torque generated in a period in which each piston reaches the bottom dead center may accelerate the generator and cause step out.

In this regard, with the above configuration (1), it is possible to stop generation of torque before the piston reaches the bottom dead center by closing the high-pressure valve before the piston reaches the bottom dead center, for the working chamber corresponding to the piston moving downward from the top dead center toward the bottom dead center. Thus, with the above configuration (1), it is possible to reduce torque inputted into the generator from the hydraulic motor quickly, and thus to prevent step out of the generator securely.
(2) In some embodiments, in the above configuration (1), the motor controller is configured so that: during normal operation of the grid, each time when at least one decision point that is set within a period of one revolution of the rotatable shaft comes, the motor controller decides whether to cause the working chamber corresponding to the decision point to be in an active state or an inactive state, for the working chamber decided to be in the active state, opens the high-pressure valve while the piston is moving downward from the top dead center toward the bottom dead center, and for the working chamber decided to be in the inactive state, keeps the high-pressure valve closed while the piston is moving downward from the top dead center toward the bottom dead center; and at the time of occurrence of a failure event of the grid, for the working chamber decided to be in the active state at the most recent decision point, the motor controller closes the high-pressure valve before the piston moving downward reaches the bottom dead center without waiting for the next decision point.
   With the above configuration (2), when a failure event of the grid occurs, for the working chamber having been decided to be in the active state at the most recent decision point and having entered the active state, the high-pressure valve is closed before the piston moving downward from the top dead center toward the bottom dead center reaches the bottom dead center without waiting for the working chamber to be decided to be in the inactive state at the next decision point. Thus, it is possible to halt generation of torque before the piston reaches the bottom dead center without waiting for the next decision point to come. As a result, it is possible to reduce torque inputted into the generator from the hydraulic motor quickly, and thus to prevent step out of the generator securely.
(3) In some embodiments, in the above configuration (2), the motor controller is configured to decide, at the time of occurrence of a failure event of the grid, to cause the working chamber to be in the inactive state at the next decision point, and to keep the high-pressure valve closed.
   With the above configuration (3), when a failure event of the grid occurs, for the working chamber whose high-pressure valve is closed before the descending piston reaches the bottom dead center, the working chamber is caused to be in the inactive state at the next decision point and the high-pressure valve is kept closed, without waiting for the next decision point to come. Thus, it is possible to keep the working chamber in the inactive state at the next decision point.
(4) In some embodiments, in the above configuration (3), the motor controller is configured to keep, at the time of occurrence of a failure event of the grid, the low-pressure valve open at the next decision point so that the working chamber is in the inactive state.
   With the above configuration (4), when a failure event of the grid occurs, for the working chamber whose high-pressure valve is closed before the descending piston reaches the bottom dead center, the working chamber is caused to be in the inactive state at the next decision point and the low-pressure valve is kept open, without waiting for the next decision point to come. Thus, it is possible to keep the working chamber in the inactive state at the next decision point.
(5) According to the invention, in any one of the above configurations (1) to (4), the high-pressure valve is a normally-closed solenoid valve, and the motor controller is configured to stop supplying the high-pressure valve with exciting current, after the exciting current supplied to the high-pressure valve or the sum of the exciting current supplied to the high-pressure valve and exciting current supplied to the low-pressure valve becomes not greater than a threshold value, at the time of occurrence of a failure event of the grid.
   Exciting current is supplied to the high-pressure valve, which is a normally-closed solenoid valve, in order to open the high-pressure valve. If supply of the exciting current is halted suddenly to switch the high-pressure valve from the open state to the closed state, the high-pressure valve may get damaged. In this regard, with the above configuration (5), supply of the exciting current to the high-pressure valve is halted after waiting until the exciting current supplied to the high-pressure valve or the sum of the exciting current supplied to the high-pressure valve and the low-pressure valve becomes not greater than a threshold value when the high-pressure valve is switched from the open state to the closed state, which makes it possible to protect the high-pressure valve from damage.
(6) In some embodiments, in any one of the above configurations (1) to (5), the low-pressure valve is a normally-open solenoid valve, and the motor controller is configured to stop supplying the low-pressure valve with exciting current, at the time of occurrence of a failure event of the grid.
   Exciting current is supplied to the low-pressure valve, which is a normally-open solenoid valve, in order to close the low-pressure valve. With the above configuration (6), supply of exciting current to the low-pressure valve is halted when a failure event of the grid occurs, which makes it possible to keep the low-pressure valve open and to cause the working chamber to be in the inactive state.
(7) In some embodiments, in any one of the above configurations (1) to (6), the power generating apparatus of renewable energy type further includes a grid voltage measuring part for measuring a voltage of the grid, and a communication line for transmitting a signal representing a measurement result by the grid voltage measuring part to the motor controller, the communication line being provided as at least a part of a wiring between the grid voltage measuring part and the motor controller.
   With the above configuration (7), a signal representing the measurement result obtained by the grid voltage measuring part is transmitted to the motor controller via the communication line, which makes it possible for the motor controller to determine whether a failure event is occurring in the grid on the basis of the measurement result.
(8) In some embodiments, in the above configuration (7), the power generating apparatus of renewable energy type further includes a superordinate controller for sending a command to the motor controller. The motor controller is configured to control the hydraulic motor on the basis of the command from the superordinate controller during normal operation of the grid, and to receive the signal directly from the grid voltage measuring part via the communication line and not via the superordinate controller, and control the hydraulic motor on the basis of the signal, at the time of occurrence of a failure event of the grid.
   With the above configuration (8), upon occurrence of a failure event of the grid, the motor controller receives a signal from the grid voltage measuring part directly without involving a superordinate controller, which makes it possible to control the hydraulic motor quickly as compared to a case in which the motor controller controls the hydraulic motor on the basis of a command from a superordinate controller. As a result, upon occurrence of a failure of the grid, it is possible to reduce torque inputted into the generator from the hydraulic motor quickly, and thus to prevent step out of the generator securely.
(9) In some embodiments, in any one of the above configurations (1) to (8), the power generating apparatus of renewable energy type further includes an exciter for supplying a field winding of the generator with a field current, and an exciter controlling unit for controlling the exciter. The exciter controlling unit is configured to increase the field current immediately after voltage reduction of the grid.
   When a failure event occurs in the grid such that causes voltage reduction of the grid, the terminal voltage of the generator decreases instantly accompanied by an instant decrease of the electrical output (active power) of the generator. As a result, mechanical input from the hydraulic motor may become excessive with respect to the electrical output of the generator, thereby increasing the rotation speed of the rotor of the generator and causing the generator to step out.
   In the above configuration (9), the field current is increased immediately after the terminal voltage of the synchronous generator decreases due to occurrence of a failure event in the grid, so that the internal induced voltage of the generator becomes larger and the electric power of the generator increases. Thus, the synchronizing force of the synchronous generator increases so that the first wave swing of the synchronous generator after occurrence of the failure event is suppressed, which improves the transitional stability. Accordingly, with the above configuration (9), it is possible to prevent step out of the synchronous generator even more effectively by increasing the filed current that is to be supplied to the field winding of the generator immediately after voltage reduction of the grid.
(10) In some embodiments, in any one of the above configurations (1) to (9), the failure event is a situation such that the voltage of the grid is reduced to not more than a prescribed voltage in a grid code.
(11) In some embodiments, in any one of the above configurations (1) to (10), the power generating apparatus of renewable energy type is a wind turbine power generating apparatus configured to generate electric power from wind as the renewable energy.
   As described above, even if each cylinder is switched to the inactive state to reduce the displacement of the hydraulic motor upon occurrence of a failure event of the grid, the torque generated in a period in which each piston reaches the bottom dead center may accelerate the generator and cause step out.
   In this regard, with the above configuration (11), upon occurrence of a failure event of the grid, it is possible to stop generation of torque before the piston reaches the bottom dead center because the high-pressure valve is closed before the piston reaches the bottom dead center, for the working chamber corresponding to the piston moving downward from the top dead center toward the bottom dead center. Thus, with the above configuration (11), it is possible to reduce torque inputted into the generator from the hydraulic motor quickly, and thus to prevent step out of the generator even more securely.
(12) A motor controller according to at least one embodiment of the present invention is a motor controller for controlling the hydraulic motor of the power generating apparatus of renewable energy type having any one of the above configurations (1) to (11), which is configured to close the high-pressure valve, for at least one of the working chambers corresponding to at least one piston moving downward from a top dead center toward a bottom dead center among the plurality of pistons, before the at least one piston moving downward reaches the bottom dead center, at the time of occurrence of a failure event of the grid.

As described above, even if each cylinder is switched to the inactive state to reduce the displacement of the hydraulic motor upon occurrence of a failure event of the grid, the torque generated in a period in which each piston reaches the bottom dead center may accelerate the generator and cause step out.

In this regard, with the above configuration (12), it is possible to stop generation of torque before the piston reaches the bottom dead center because the high-pressure valve is closed before the piston reaches the bottom dead center, for the working chamber corresponding to the piston moving downward from the top dead center toward the bottom dead center. Thus, with the above configuration (12), it is possible to reduce torque inputted into the generator from the hydraulic motor quickly, and thus to prevent step out of the generator even more securely.

Method of operating a power generating apparatus of renewable energy type according to at least one embodiment of the present invention is for a power generating apparatus of renewable energy type including a rotor configured to rotate by renewable energy, a hydraulic pump configured to be driven by the rotor to pressurize working fluid, a hydraulic motor configured to be driven by the working fluid from the hydraulic pump, a high-pressure fluid line connecting an outlet of the hydraulic pump and an inlet of the hydraulic motor and configured to supply the hydraulic motor with the working fluid pressurized by the hydraulic pump, a low pressure fluid line connecting an outlet of the hydraulic motor and an inlet of the hydraulic pump and configured to return the working fluid having flown through the hydraulic motor to the hydraulic pump, and a generator connected to a grid and configured to be driven by the hydraulic motor.

The hydraulic motor includes a rotatable shaft, a plurality of pistons configured to reciprocate in conjunction with the rotatable shaft, a plurality of cylinders forming a plurality of working chambers together with the plurality of pistons, a high-pressure valve for switching a communication state between each of the working chamber and the high-pressure fluid line, and a low-pressure valve for switching a communication state between each of the working chamber and the low pressure fluid line.

The method includes a step of closing the high-pressure valve, for at least one of the working chambers corresponding to at least one piston moving downward from a top dead center toward a bottom dead center among the plurality of pistons, before the at least one piston moving downward reaches the bottom dead center, at the time of occurrence of a failure event of the grid.

As described above, even if each cylinder is switched to the inactive state to reduce the displacement of the hydraulic motor upon occurrence of a failure event of the grid, the torque generated in a period in which each piston reaches the bottom dead center may accelerate the generator and cause step out.

In this regard, with the above method (13), upon occurrence of a failure event of the grid, it is possible to stop generation of torque before the piston reaches the bottom dead center by closing the high-pressure valve before the piston reaches the bottom dead center, for the working chamber corresponding to the piston moving downward from the top dead center toward the bottom dead center. Thus, with the above method (13), it is possible to reduce torque inputted into the generator from the hydraulic motor quickly, and thus to prevent step out of the generator even more securely.

An object of at least one embodiment of the present invention is to provide a power generating apparatus of renewable-energy type whereby it is possible to prevent step out of a generator even more securely when a failure event occurs in a utility grid.

### BRIEF DESCRIPTION OF DRAWINGS

FIG. 1 is an overall configuration diagram of a wind turbine generator according to one embodiment.
FIG. 2 is a configuration diagram of a hydraulic transmission and a transmission control part of a wind turbine generator according to one embodiment.
FIG. 3 is a configuration diagram of a hydraulic motor according to one embodiment.
FIG. 4 is a diagram for describing the switching control of a high-pressure valve and a low-pressure valve.
FIG. 5 is a diagram illustrating configuration of connection between a utility grid and a wind turbine generator according to one embodiment.
FIG. 6 is a graph showing a relationship between torque generated by cylinders of a hydraulic motor and exciting current supplied to the high-pressure valve and the low-pressure valve, according to one embodiment.
FIG. 7 is a graph showing a change in torque generated by a motor upon occurrence of a failure event of the grid in a wind turbine generator according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiment, a wind turbine generator will be described as an example of a power generating apparatus of renewable-energy type. However, the present invention can be applied to other power generating apparatuses of renewable-energy type such as a tidal current power generator, an ocean current generator, and a river current generator.

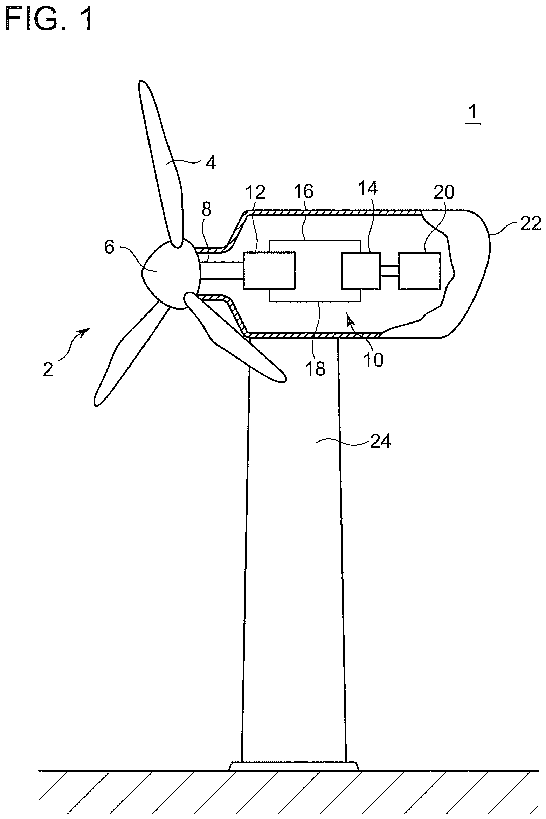

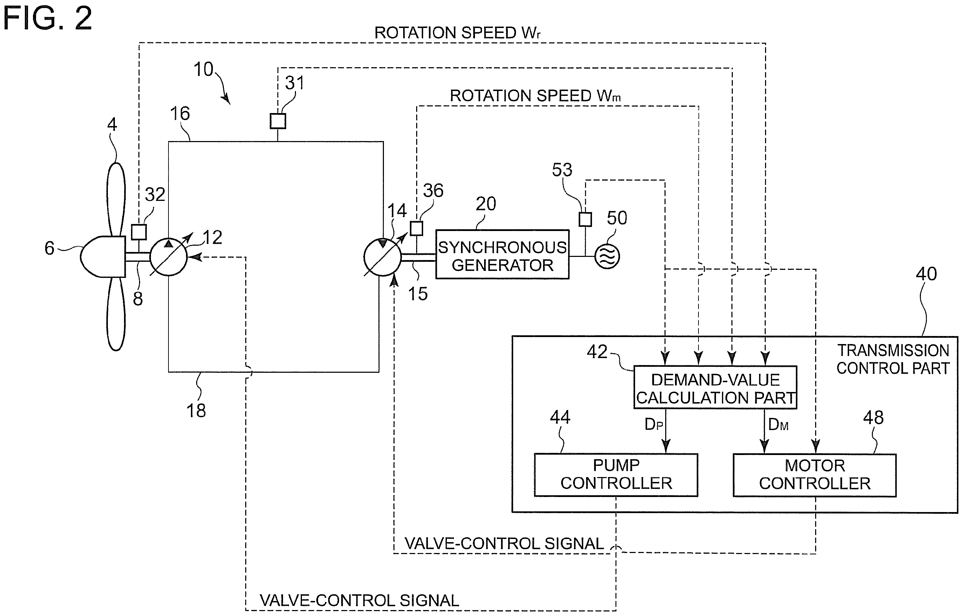

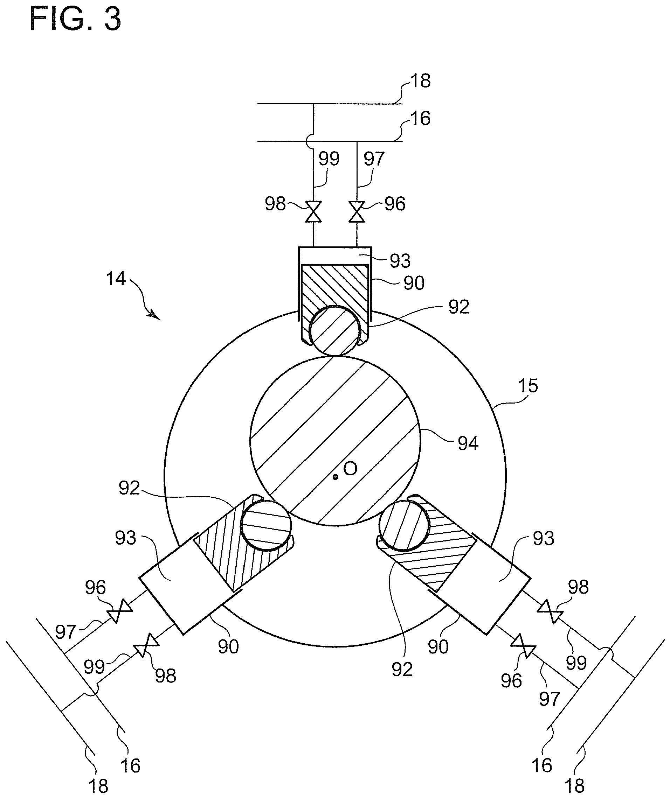

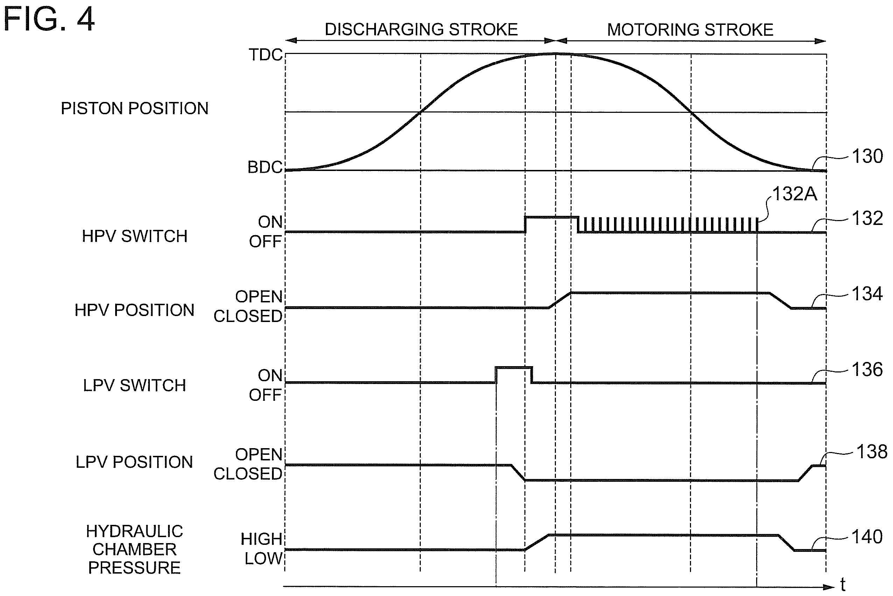

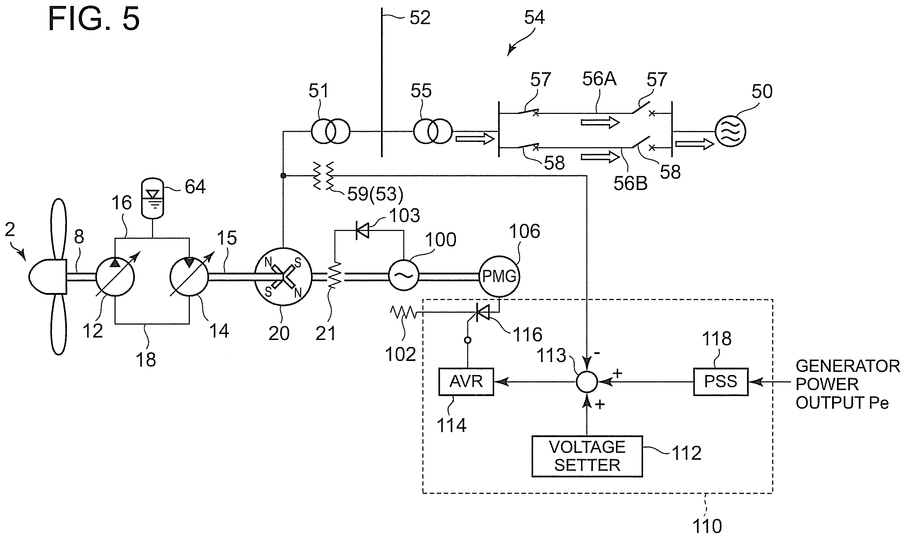

Firstly, with reference to FIGs. 1 to 5, the configuration of a wind turbine generator according to one embodiment will be described. FIG. 1 is an overall configuration diagram of a wind turbine generator according to one embodiment. FIG. 2 is a configuration diagram of a hydraulic transmission and a transmission control part of a wind turbine generator according to one embodiment. FIGs. 3 and 4 are diagrams of a hydraulic pump and a hydraulic motor according to one embodiment, respectively. FIG. 5 is a diagram illustrating configuration of connection between a utility grid and a wind turbine generator according to one embodiment.

As illustrated in FIG. 1, the wind turbine generator 1 includes a rotor 2 that rotates upon receiving wind, a hydraulic transmission 10 that increases the rotation speed of the rotor 2, a synchronous generator 20 connected to a grid (utility grid) 50 (see FIG. 2), and a transmission control part 40 (see FIG. 2) that controls the hydraulic transmission 10.

The hydraulic transmission 10 and the synchronous generator 20 may be accommodated inside a nacelle 22 or a tower 24 supporting the nacelle 22. While the wind turbine generator 1 illustrated in FIG. 1 is an onshore wind turbine generator with the tower 24 standing on the ground, the wind turbine generator 1 may be disposed on any site including a site on the ocean.

The rotor 2 includes a hub 6, blades 4 mounted to the hub 6, and a rotation shaft 8 coupled to the hub 6. Specifically, three blades 4 extend radially from the hub 6 at the center, and each blade 4 is mounted to the hub 6 coupled to the rotation shaft 8. In this way, the entire rotor 2 rotates by the force of wind received by the blades 4, and the rotation is inputted to the hydraulic transmission 10 via the rotation shaft 8. The rotation energy of the rotor 2 is inputted into the synchronous generator 20 via the hydraulic transmission 10, and electric power is generated by the synchronous generator 20.

As illustrated in FIGs. 1 and 2, the hydraulic transmission 10 includes a hydraulic pump 12 driven by the rotor 2, a hydraulic motor 14 including a rotatable shaft (output shaft) 15 connected to the synchronous generator 20, and a high-pressure fluid line 16 and a low-pressure fluid line 18 disposed between the hydraulic pump 12 and the hydraulic motor 14. As illustrated in FIG. 2, the synchronous generator 20 connected to the grid (utility grid) 50 is coupled to the rotatable shaft (output shaft) 15 of the hydraulic motor 14.

The hydraulic pump 12 is driven by the rotor 2 to increase the pressure of working fluid. The outlet of the hydraulic pump 12 and the inlet of the hydraulic motor 14 are connected to each other by the high-pressure fluid line 16, so that the working fluid after having its pressure increased by the hydraulic pump 12 is supplied to the hydraulic motor 14 via the high-pressure fluid line 16. The hydraulic motor 14 is driven by the working fluid from the hydraulic pump 12. The outlet of the hydraulic motor 14 and the inlet of the hydraulic pump 12 are connected to each other by the low-pressure fluid line 18, so that the working fluid having performed work in the hydraulic motor 14 and flown through the hydraulic motor 14 is returned to the hydraulic pump 12 via the low-pressure fluid line 18.

While the hydraulic transmission 10 illustrated in FIGs. 1 and 2 includes only one hydraulic motor 14, a plurality of hydraulic motors 14 may be provided and each of the hydraulic motors 14 may be connected to the hydraulic pump 12.

The specific configuration of the hydraulic motor 14 will be described. FIG. 3 is a configuration diagram of a hydraulic motor according to one embodiment. As illustrated in FIG. 3, the hydraulic motor 14 includes the rotatable shaft 15, a plurality of pistons 92, a plurality of cylinders 90 forming a plurality of working chambers 93 with the pistons 92, and a high-pressure valve 96 and a low-pressure valve 98 provided for each of the working chambers 93. An eccentric cam 94 with a cam curved surface that engages with the pistons 92 is mounted to the rotatable shaft 15 eccentrically from the axial center O of the rotatable shaft 15, and the pistons 92 reciprocate inside the cylinders 90 in conjunction with the rotatable shaft 15.

The high-pressure valves 96 are disposed in a high-pressure communication channel 97 between the high-pressure fluid line 16 and the respective working chambers 93, and configured to be capable of switching the communication state between the respective working chambers 93 and the high-pressure fluid line 16. Further, the low-pressure valves 98 are disposed in a low-pressure communication channel 99 between the low-pressure fluid line 18 and the respective working chambers 93, and configured to be capable of switching the communication state between the respective working chambers 93 and the low-pressure fluid line 18.

While the hydraulic motor 14 is operating, the differential pressure between the high-pressure fluid line 16 and the low-pressure fluid line 18 created by the hydraulic pump 12 moves the pistons 92 upward and downward cyclically, so that each piston 92 repeats a descending stroke of moving toward a bottom dead center from a top dead center and an ascending stroke of moving toward a top dead center from a bottom dead center. While the hydraulic motor 14 is operating, the capacity of the working chambers 93 formed by the pistons 92 and the inner wall surfaces of the cylinders 90 changes cyclically.

The hydraulic motor 14 is capable of switching each working chamber 93 to an active state or an inactive state by the switching control of the high-pressure valves 96 and the low-pressure valves 98. If the working chamber 93 is in the active state, the high-pressure valve 96 is opened and the low-pressure valve 98 is closed during the descending stroke to cause working fluid to flow into the working chamber 93 from the high-pressure fluid line 16, and the high-pressure valve 96 is closed and the low-pressure valve 98 is opened during the ascending stroke to send out the working fluid having performed work in the working chamber 93 to the low-pressure fluid line 18. On the other hand, if the working chamber 93 is in the inactive state, during both of the descending stroke and the ascending stroke, the high-pressure valve 96 is kept closed and the low-pressure valve 98 is kept open, so as to reciprocate the working fluid between the working chamber 93 and the low-pressure fluid line 18 (i.e., high-pressure fluid from the high-pressure fluid line 16 is not accepted into the working chamber 93). In this way, the displacement of the hydraulic motor 14 as a whole can be adjusted by changing the rate of the number of the working chambers 93 in the active state to the total number of the working chamber 93, similarly to the hydraulic pump 12. The displacement of the hydraulic motor 14 as a whole is adjusted by a transmission control part 40 described below.

The high-pressure valve 96 provided for each working chamber 93 of the hydraulic motor 14 may be a normally-closed solenoid valve. In one embodiment, each high-pressure valve 96 is a normally-closed solenoid valve that passively opens when the pressure in the working chamber 93 exceeds the pressure of the high-pressure fluid line 16, that is kept open while being supplied with exciting current after once being opened, and that closes when the supply of the exciting current is halted.

The low-pressure valve 98 provided for each working chamber 93 of the hydraulic motor 14 may be a normally-open solenoid valve. In one embodiment, each low-pressure valve 98 is a normally-open solenoid valve that passively opens when the pressure in the working chamber 93 falls below the pressure of the low-pressure fluid line 18, that is kept open while not being supplied with exciting current after once being opened, and that closes when supplied with exciting current.

The supply of the exciting current to the high-pressure valves 96 and the low-pressure valves 98 is controlled in accordance with a valve-switching command (control signal) from a motor controller 48 described below.

FIG. 4 is a diagram for describing the switching control of the high-pressure valve 96 and the low-pressure valve 98 during operation of the hydraulic motor 14. In FIG. 4, the piston-cycle curve 130 is a curve representing a time-series change of the position of a piston 92, where the horizontal axis is time t. Further, in the drawing: an HPV control signal 132 represents a control signal that is to be supplied to the high-pressure valve 96; a high-pressure valve position 134 represents an open/closed state of the high-pressure valve 96; an LPV control signal 136 represents a control signal that is to be supplied to the low-pressure valve 98; a low-pressure valve position 138 represents an open/closed state of the low-pressure valve 98; and a pressure curve 140 represents a pressure in the working chamber 93.

In the hydraulic motor 14, as represented by the piston-cycle curve 130 in FIG. 4, the differential pressure between the high-pressure fluid line 16 and the low-pressure fluid line 18 created by the hydraulic pump 12 moves the pistons 92 upward and downward cyclically, so that each piston 92 repeats an ascending stroke of moving toward a top dead center from a bottom dead center and a descending stroke of moving toward a bottom dead center from a top dead center.

The HPV control signal 132 is applied to the high-pressure valve 96 of normally-closed type. As represented by the HPV control signal 132 in FIG. 4, exciting current is supplied to the high-pressure valve 96 and the high-pressure valve 96 is excited immediately before the piston 92 reaches the top dead center, and thereby the high-pressure valve is opened as represented by the high-pressure valve position 134.

Once the high-pressure valve 96 opens, the high-pressure fluid flows into the working chamber 93 to rotate the cam 94. To latch the high-pressure valve 96 in an open state, required is only a small force that overtakes a biasing force (a force acting in a direction to close the high-pressure valve 96) of a spring (not illustrated) of the high-pressure valve 96. Thus, after the piston 92 reaches the top dead center, it is possible to latch the high-pressure valve 96 in an open state with little current by repeating excitation and non-excitation of the high-pressure valve 96 at high frequency. The final pulse 132A of the high-frequency signal repeating excitation and non-excitation of the high-pressure valve 96 may be regarded as a control signal for switching the high-pressure valve 96 from an open state to a closed state.

Then, when the supply of the pulse-like voltage signal for excitation and non-excitation of the high-pressure valve 96 is halted, the high-pressure valve 96 is closed by a biasing force of the spring.

On the other hand, as to the low-pressure valve 98 of normally-open type, exciting current is supplied to the low-pressure valve 98 to excite and close the low-pressure valve 98 immediately before the piston 92 reaches the top dead center, and then the high-pressure valve 96 is excited and opened, so that the low-pressure valve 98 is kept closed by the differential pressure between the upstream side and the downstream side. As can be seen from the low-pressure valve position 138, the low-pressure valve 98 is closed by being excited immediately before the piston 92 reaches the top dead center.

Even if the low-pressure valve 98 is closed by excitation and then excitation is halted before the piston 92 reaches the top dead center, the low-pressure valve 98 is kept closed by the differential pressure between the working chamber 93 and the low-pressure fluid line 18 because the pressure in the working chamber 93 is high (see the pressure curve 140) during a period in which the piston 92 moves toward the top dead center (a period in the ascending stroke after the low-pressure valve 98 is closed). Then, when the piston 92 reaches the top dead center and the cycle advances to the descending stroke (motoring stroke), the high-pressure fluid flows into the working chamber 93 via the high-pressure valve 96, and the pressure in the working chamber 93 is maintained to be high, which keeps the low-pressure valve 98 closed by the differential pressure between the working chamber 93 and the low-pressure fluid line 18.

Then, when the supply of the pulse-like voltage signal to the high-pressure valve 96 is halted immediately before the piston 92 reaches the bottom dead center, the high-pressure valve 96 closes and the pressure in the working chamber 93 decreases, with the working chamber 93 continuously expanding. As a result, the differential pressure between the working chamber 93 and the low-pressure fluid line 18 becomes small, and thereby the low-pressure valve 98 automatically opens.

As described above, after the piston 92 of the hydraulic motor 14 reaches the top dead center, excitation and non-excitation of the high-pressure valve 96 is repeated until immediately before the piston 92 reaches the bottom dead center, which makes it possible to keep the high-pressure valve 96 open while saving the electric power that is supplied to excite the high-pressure valve 96.

Further, after the high-pressure valve 96 is excited immediately before the piston 92 of the hydraulic motor 14 reaches the top dead center, excitation of the low-pressure valve 98 is halted, and from this point of time the low-pressure valve 98 is closed by the differential pressure between the working chamber 93 and the low-pressure fluid line 18, which makes it possible to save the electric power required to excite the low-pressure valve 98.

FIG. 5 is a diagram of a configuration example of a communication line between the synchronous generator 20 and the grid (utility grid) 50. As illustrated in the drawing, the synchronous generator 20 is connected to a bus 52 via a booster transformer 51, and the bus 52 is connected to the grid 50 by the communication line 54. The communication line 54 includes a substation transformer 55 and circuits 56A, 56B which respectively include circuit breakers 57, 58. If there is no failure in the grid 50 and the communication line 54, the circuit breakers 57, 58 are all closed, and the electric power generated in the synchronous generator 20 is transmitted toward the grid 50 through the communication line 54 in the direction of the arrows.

Further, the synchronous generator 20 includes a field winding 21 that rotates with the rotatable shaft (output shaft) 15 of the hydraulic motor 14, and a stationary armature (not illustrated) connected to the booster transformer 51. To the field winding 21, DC field current is supplied from an exciter 100.

The magnitude of the filed current supplied to the field winding 21 is controlled by an exciter controller 110. The exciter controller 110 may control the exciter 100 so that the terminal voltage becomes a set value (a command value) on the basis of a measurement value of terminal voltage of the synchronous generator 20 obtained by a terminal-voltage detector (potential transformer) 59.

As a specific configuration of the exciter 100, for instance, an AC exciter as illustrated in FIG. 5 may be used. Specifically, the exciter 100 may be an AC generator including a rotating armature (not shown) and a field winding (stator) 102.

In such case, the exciter 100 is an AC exciter directly connected to the rotatable shaft (output shaft) 15 of the hydraulic motor 14, and AC outputted from the rotating armature of the exciter 100 is converted into DC by a rectifier (rotary rectifier) 104 and then supplied to the field winding 21 of the synchronous generator 20 as the field current. The field winding 21, the armature of the exciter 100, and the rectifier 103 rotate with the rotatable shaft (output shaft) 15 of the hydraulic motor 14. In this way, AC from the rotating armature of the exciter 100 is rectified by the rectifier (rotary rectifier) 103 and supplied to the field winding 21 which is a rotator, which makes it no longer necessary to provide a brush, thereby eliminating the need for brush maintenance (regular replacement).

In the example illustrated in FIG. 5, the exciter controller 110 changes the magnitude of the field current supplied to the field winding 102 of the exciter 100 so as to adjust the magnitude of the field current flowing to the field winding 21 of the synchronous generator 20.

In such case, the exciter controller 110 may include a voltage setter 112, a comparison circuit 113, an automatic voltage regulator (AVR) 114 and a thyristor 116, as illustrated in FIG. 5. The voltage setter 112 outputs a set value of the terminal voltage of the synchronous generator 20 to the comparison circuit 113. In the comparison circuit 113, the measurement value of the terminal voltage of the synchronous generator 20 detected by the terminal-voltage detector 59 is compared with the set value inputted from the voltage setter 112, and the difference of the values is outputted to the AVR 114. In the AVR 114, on the basis of the difference outputted from the comparison circuit 113, a gate signal is supplied to the thyristor 116. The thyristor 116 is provided between the field winding 102 of the exciter 100 and an auxiliary exciter formed by a permanent magnetic generator (PMG) 106 directly connected to the rotatable shaft (output shaft) 15 of the hydraulic motor 14. The thyristor 116 uses the PMG (the auxiliary exciter) 106 as power source and excites the field winding (stator field) 102 of the exciter 100.

In this manner, the PMG 104 which is directly connected to the rotatable shaft (output shaft) 15 of the hydraulic motor 14 and mounted to a shaft common to the synchronous generator 20, is used as power source of the thyristor 116, which makes it possible to excite the synchronous generator 20 without an external power source even before the synchronous generator 20 connects to the grid 50. This is extremely advantageous for wind turbine generators, which generally have a difficulty in obtaining power from external power source.

From a perspective of improving the steady-state stability of the synchronous generator 20, the exciter controller 110 may be provided with a power system stabilizer (PSS). For instance, as illustrated in FIG. 5, the PSS 118 provided for the exciter controller 110 may correct the comparison result of the comparison circuit 113 on the basis of the active power Pe generated in the synchronous generator 20. Further, the PSS 118 mainly functions to suppress the generator swing in a fault event response mode which is described later. Furthermore, the active power Pe can be calculated from the measurement values of the current and the voltage outputted from the stationary armature of the synchronous generator 20.

As illustrated in FIG. 2, the wind turbine generator 1 includes a transmission control part 40 for controlling the hydraulic transmission 10. The transmission control part 40 adjusts the displacement of the hydraulic pump 12 and the hydraulic motor 14.

The transmission control part 40 includes a demand-value calculation part 42 for calculating a demand value of the displacement of the hydraulic pump 12 and the hydraulic motor 14.

Further, the transmission control part 40 includes a pump controller 44 for controlling the hydraulic pump 12 and a motor controller 48 for controlling the hydraulic motor 14. The pump controller 44 and the motor controller 48 receive a command signal representing a demand value of the displacement calculated by the demand-value calculation part 42, and transmit a valve-control signal to the hydraulic pump 12 and the hydraulic motor 14 on the basis of the command signal. That is, the demand-value calculation part 42 is a superordinate controller of the pump controller 44 and the motor controller 48. As a result of the switching control of the high-pressure valve and the low-pressure valve performed on the basis of the demand value of the displacement calculated by the demand-value calculation part 42, a predetermined displacement is obtained at the hydraulic pump 12 and the hydraulic motor 14.

Further, the wind turbine generator 1 includes a grid voltage measuring part 53 for measuring the voltage of the grid 50.

The grid voltage measuring part 53 may measure the voltage of the grid 50 itself. Alternatively, the grid voltage measuring part 53 may be a terminal-voltage detector 59 for measuring the terminal voltage of the synchronous generator 20 as a parameter that represents the voltage of the grid 50 (see FIG. 5).

The grid voltage measuring part 53 and the transmission control part 40 are connected to each other via a communication line (e.g. CAN communication line) (see FIG. 2), so that a signal representing a measurement result obtained by the grid voltage measuring part 53 is transmitted to the transmission control part 40 via the communication line.

In one embodiment, the grid voltage measuring part 53 and the motor controller 48 are connected to each other via the above communication line, and a signal representing a measurement result obtained by the grid voltage measuring part 53 is directly transmitted to the motor controller 48 via the communication line and not via the demand-value calculation part 42.

The transmission control part 40 controls the hydraulic transmission 10 so as to make the rotation speed of the rotation shaft 8 variable with respect to the wind velocity, while maintaining a state in which the synchronous generator 20 rotates at a synchronous speed based on the frequency of the grid 50.

For this reason, the demand-value calculation part 42 may calculate target torque of the hydraulic pump 12 whereby it is possible to obtain a rotor rotation speed at which the operation efficiency reaches its maximum with respect to the measured wind velocity, and calculate a displacement demand value Dp of the hydraulic pump 12 on the basis of the target torque.

Further, the demand-value calculation part 42 may calculate a demand value D_{M} of the displacement of the hydraulic motor 14 so that the rotation speed of the synchronous generator 20 becomes the synchronous speed corresponding to the frequency of the grid 50, on the basis of the target output of the hydraulic motor 14 calculated on the basis of the target output of the hydraulic pump 12.

As illustrated in FIG. 2, the wind turbine generator 1 includes a rotation sensor 32 for measuring the rotation speed of the rotation shaft 8, a rotation sensor 34 for measuring the rotation speed of the rotatable shaft 15, and a pressure sensor 31 for measuring the pressure of the high-pressure fluid line 16. The measurement result obtained by the various measurement instruments may be transmitted to the transmission control part 40, and the displacement demand value Dp of the above hydraulic pump 12 and the displacement demand value D_{M} of the hydraulic motor can be calculated using the measurement results of the above instruments.

The pump controller 44 and the motor controller 48 respectively receive the displacement demand value D_{P} of the hydraulic pump 12 and the displacement demand value D_{M} of the hydraulic motor 14 calculated by the demand-value calculation part 42, and perform the switching control on the high-pressure valves and the low-pressure valves of the hydraulic pump 12 and the hydraulic motor 14 so as to achieve the received displacement demand values.

The motor controller 48 adjusts the displacement of the hydraulic motor 14 as a whole by performing the switching control on the high-pressure valves 96 and the low-pressure valves 98 so as to change the rate of the number of the working chambers 93 in the active state to the total number of the working chambers 93.

Each time when at least one decision point set within a period of one revolution of the rotatable shaft 15 of the hydraulic motor 14 comes, the motor controller 48 decides whether to cause the working chamber 93 corresponding to each decision point that has entered the active state or the inactive state.

The decision point is a point for determining which of the active state or the inactive state is to be set for each working chamber 93 during a single cycle of revolution of the rotatable shaft 15. The decision point is set for each working chamber 93.

The decision point may be set in a period during which the piston 92 ascends from the bottom dead center toward the top dead center.

The decision point may be defined by time. For instance, the decision point may be set as a time at which time of 2/3T has passed since the piston 92 passes by the top dead center, where T is a cycle of the rotatable shaft 15.

Alternatively, the decision point may be defined by the rotational angle of the rotatable shaft 15. For instance, the decision point may be the time when the rotational angle of the rotatable shaft 15 is 240°, where the rotational angle of the rotatable shaft 15 is 0° (360°) when the piston 92 passes through the top dead center and is 180° when the piston 92 passes through the bottom dead center.

The motor controller 48 may perform the switching control of the high-pressure valve 96 and the low-pressure valve 98 so that, when it is decided to cause the working chamber 93 corresponding to a decision point to be in the active state (or the inactive state), the working chamber 93 enters the active state (or the inactive state) during a period after the piston 92 passes through the top dead center for the first time after the passage of the decision point and before the piston 92 passes through the top dead center again for the next time, which is, in other words, a period corresponding to a single revolution of the rotatable shaft 15.

The transmission control part 40 determines whether a failure event has occurred in the grid 50 on the basis of a measurement result of the grid voltage (e.g. a measurement result of the terminal voltage of the synchronous generator 20) transmitted from the grid voltage measuring part 53.

The failure event of the grid 50 may be voltage reduction of the grid 50 to a voltage prescribed in a grid code or less. Such a failure event may occur from short-circuit between lines, disconnection, earth fault (in which a communication line contacts the earth) that happens to the grid 50 or the communication line 54, for instance. When such a failure event of the grid 50 occurs, the power transmittable to the grid 50 becomes limited, which leads to an instant decrease in the electric output (active power) of the synchronous generator 20. As a result, mechanical input from the hydraulic motor 14 may become excessive with respect to the electrical output of the synchronous generator 20, thereby causing the internal phase angle of the synchronous generator 20 to increase rapidly and the synchronous generator 20 to step out.

Such phenomenon occurs in an extremely short period (e.g. few milliseconds to few seconds) immediately after occurrence of a failure event of the grid 50. Thus, for the wind turbine generator 1, in which a failure event of the grid 50 may have direct influence on the synchronous generator 20, it is desirable to take a quick action immediately after the occurrence of a failure event of the grid 50.

When it is determined that the grid 50 is normal by the transmission control part 40, i.e., when a rapid decrease is not detected in a measurement result of the grid voltage received by the grid voltage measuring part 53 at the transmission control part 40, the motor controller 48 opens the high-pressure valve 96 while the piston 92 is moving downward from the top dead center toward the bottom dead center, for the working chamber that has been decided to enter the active state at the decision point, and sends a valve-control signal to the high-pressure valve 96 of the hydraulic motor 14, so as to keep the high-pressure valve 96 closed while the piston 92 is moving downward from the top dead center toward the bottom dead center, for the working chamber decided to be in the inactive state.

On the other hand, when it is determined that a failure event has occurred in the grid 50 by the transmission control part 40, i.e., when there is a rapid decrease in a measurement result of the grid voltage received by the grid voltage measuring part 53 at the transmission control part 40, the motor controller 48 sends a valve-control signal to the high-pressure valve 96 of the hydraulic motor 14, so as to close the high-pressure valve 96 before the piston 92 moving downward from the top dead center toward the bottom dead center reaches the bottom dead center, without waiting for the next decision point to come, for the working chamber 93 that has been decided to enter the active state at the most recent decision point.

As described above, when a failure event occurs in the grid 50, it is possible to stop generation of torque before the piston 92 reaches the bottom dead center by closing the high-pressure valve 96 before the piston 92 reaches the bottom dead center, for the working chamber 93 corresponding to the piston 92 moving downward from the top dead center toward the bottom dead center. In this way, it is possible to reduce torque inputted into the synchronous generator 20 from the hydraulic motor 14 quickly, and thus to prevent step out of the synchronous generator 20 even more securely.

Further, the motor controller 48 of the transmission control part 40 may receive the signal representing the measurement result of the grid voltage directly from the grid voltage measuring part 53 without the signal passing through the demand-value calculation part 42, which is a superordinate controller, to control the hydraulic motor 14 on the basis of this signal. For instance, the motor controller 48 may determine whether a failure event of the grid is occurring on the basis of the signal received as described above, and if it is determined that a failure event is occurring, may apply a valve control signal to the high-pressure valve 96 of the hydraulic motor 14 so as to close the high-pressure valve 96 before the piston 92 moving downward from the top dead center toward the bottom dead center reaches the bottom dead center.

In this case, it is possible to control the hydraulic motor 14 quickly upon occurrence of a failure event of the grid as compared to a case in which the motor controller 48 controls the hydraulic motor on the basis of a command from a superordinate controller. As a result, upon occurrence of a failure of the grid, it is possible to reduce torque inputted into the synchronous generator from the hydraulic motor quickly, and thus to prevent step out of the synchronous generator even more securely.

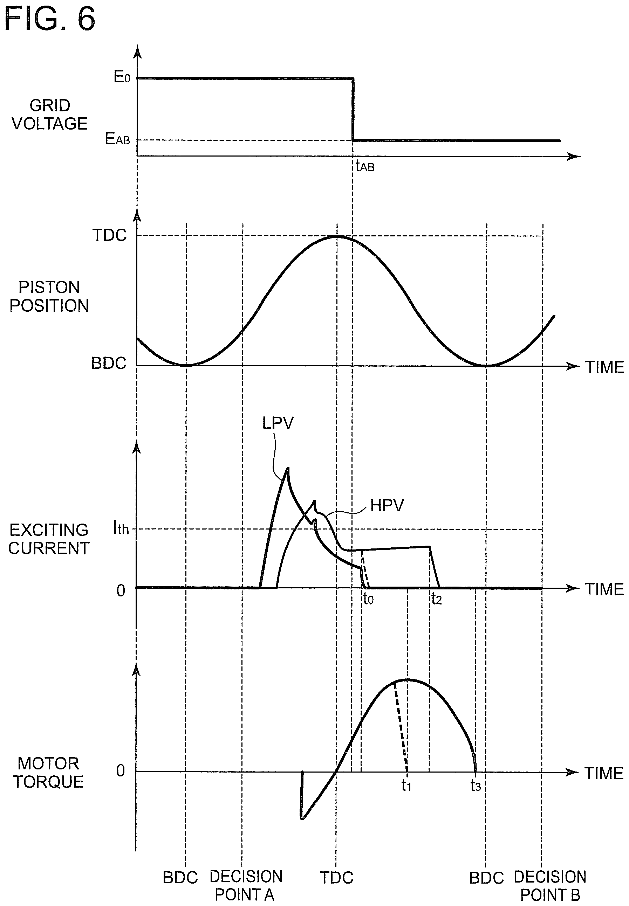

FIG. 6 is a graph showing, for a working chamber 93 decided to be in the active state in the "most recent" decision point A, a change of the grid voltage, the position of the piston, the exciting current and the motor torque generated in the working chamber 93, with respect to time t, upon detection of a failure event of the grid while the piston 92 moves downward from the top dead center (TDC) toward the bottom dead center (BDC).

When it is decided to cause the working chamber 93 to be in the active state at the decision point A, exciting current is supplied to the high-pressure valve 96 from slightly before the top dead center, so that the high-pressure valve 96 opens when the piston is in the vicinity of the top dead center. When the high-pressure valve 96 opens around the time when the piston 92 passes by the top dead center, pressurized fluid flows into the working chamber 93 from the high-pressure fluid line 16, and torque for pressing down the piston 92 is generated.

At this time, when a failure event of the grid 50 is detected at time t_{AB} when the piston 92 is moving downward from the top dead center toward the bottom dead center (i.e., when a sudden decrease of the grid voltage from E₀ to E_{AB} is detected by the transmission control part 40), if the working chamber 93 is decided to be in the inactive state after waiting until the next decision point B, exciting current would be supplied to the high-pressure valve 96 until time t₂ so as to keep the high-pressure valve 96 open until the descending piston 92 reaches the vicinity of the bottom dead center. As a result, torque would be generated in the working chamber 93 until time t₃ comes, when the piston 92 reaches the vicinity of the bottom dead center.

As described above, if it requires time to make the torque zero actually after detection of a failure event of the grid 50, the transitional motor torque during this period may cause the synchronous generator 20 to accelerate and step out.

In contrast, if supply of exciting current to the high-pressure valve 96 is halted at time t₀ so that the high-pressure valve 96 closes before the piston 92 moving downward from the top dead center to the bottom dead center reaches the bottom dead center without waiting until the working chamber 93 is decided to be in the inactive state at the next decision point B upon detection of a failure event of the grid 50 at time t_{AB} when the piston 92 is moving downward from the top dead center toward the bottom dead center (the dotted section of the graph in FIG. 6), the torque generated in the working chamber 93 begins to decrease, as the high-pressure valve 96 closes, to become zero at time t₁ prior to time t₃ when the piston 92 reaches the vicinity of the bottom dead center.

That is, when a failure event of the grid 50 occurs, for the working chamber 93 having been decided to be in the active state at the most recent decision point A and having entered the active state, the high-pressure valve 96 is closed before the piston 92 moving downward from the top dead center toward the bottom dead center reaches the bottom dead center without waiting for the working chamber 93 to be decided to be in the inactive state at the next decision point B. In this way, it is possible to halt generation of torque before the piston 92 reaches the bottom dead center without waiting for the next decision point B to come, which makes it possible to reduce torque inputted into the synchronous generator 20 from the hydraulic motor 14 quickly, and thus to prevent step out of the synchronous generator 20 upon occurrence of a failure of the grid even more securely.

The motor controller 48 may halt supplying the high-pressure valve 96 with exciting current after waiting until the exciting current supplied to the high-pressure valve 96 becomes not greater than a threshold value, upon occurrence of a failure event of the grid 50.

Alternatively, the motor controller 48 may halt supplying the high-pressure valve 96 with exciting current after waiting until the sum of the exciting current supplied to the high-pressure valve 96 and the low-pressure valve 98 becomes not greater than a threshold value, upon occurrence of a failure event of the grid 50. At time t₀ in FIG. 6, the sum of the exciting current applied to the high-pressure valve 96 and the low-pressure valve 98 becomes a threshold value Iₜₕ or less.

If supply of the exciting current is halted suddenly to switch the high-pressure valve 96 from the open state to the closed state, the high-pressure valve 96 may get damaged. In this regard, if supply of the exciting current to the high-pressure valve 96 is halted as described above after waiting until the exciting current applied to the high-pressure valve 96 or the sum of the exciting current supplied to the high-pressure valve 96 and the low-pressure valve 98 becomes not greater than a threshold value when the high-pressure valve 96 is switched from the open state to the closed state, it is possible to protect the high-pressure valve 96 from damage.

In the graph representing the exciting current in FIG. 6, the exciting current at time t0 and t2 indicating the time when supply of the exciting current to the high-pressure valve 96 is stopped corresponds to the final pulse 132A illustrated in FIG. 4, which is a control signal for switching the high-pressure valve 96 from the open state to the closed state.

For the working chamber 93 decided to be in the active state at the most recent decision point A upon occurrence of a failure event of the grid 50 so that the high-pressure valve 96 is closed before the piston moving downward from the top dead center toward the bottom dead center reaches the bottom dead center (the dotted section of the graph in FIG. 6), the motor controller 48 may decide the working chamber 93 to be in the inactive state at the next decision point B. At this time, the motor controller 48 may apply a valve-control signal to keep the high-pressure valve 96 closed and the low-pressure valve 98 open so that the working chamber 93 enters the inactive state at the decision point B (i.e., so that exciting current is not supplied to the high-pressure valve 96 and the low-pressure valve 98).

When a failure event of the grid 50 occurs, it is possible to maintain the inactive state of the working chamber 93 continuously by controlling the high-pressure valve 96 and the low-pressure valve 98, for the working chamber 93 whose high-pressure valve 96 is closed before the descending piston 92 reaches the bottom dead center without waiting for the next decision point to come, so as to cause the working chamber 93 to be in the inactive state at the following decision point. In this way, for instance, it is possible to prevent step out of the synchronous generator 20 by maintaining continuously a state in which each working chamber 93 of the hydraulic motor 14 is maintained in the inactive state and torque generated by the hydraulic motor 14 is reduced, unless the reduced grid voltage recovers after occurrence of a failure event of the grid 50.

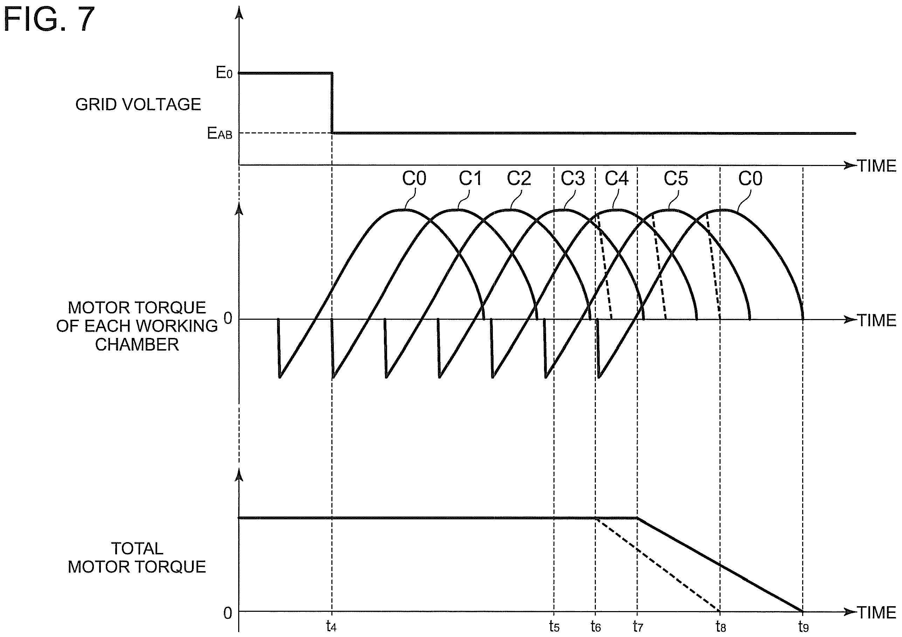

FIG. 7 is a graph showing a change, with respect to time t, of the sum of torque generated in each working chamber 93 and torque generated by the hydraulic motor 14 as a whole upon occurrence of a failure event of the grid 50 (i.e., detection of a sudden decrease of the grid voltage from E₀ to E_{AB} by the transmission control part 40) in the hydraulic motor 14 having a plurality of working chambers 93 (C0 to C5). In the graph of FIG. 7, torque generated by the six working chambers 93 (C0 to C5) is represented with reference signs C₀ to C₅, respectively.

First, a failure event occurs in the grid 50 at time t₄, and the grid voltage suddenly decreases from E₀ to E_{AB}. Then, at time t₅, the motor controller 48 detects occurrence of a failure event in the grid 50.

Until the failure event of the grid is detected at time t₅, the motor controller 48 maintains the working chambers 93 (C0 to C5) of the hydraulic motor 14 to be in the active state, and the working chambers 93 (C0 to C5) are generating torque.

Once the failure event of the grid is detected at time t₅, the motor controller 48 applies a control signal to the high-pressure valve 96 so as to close the high-pressure valve 96 for the working chamber 93 with the piston 92 moving downward from the top dead center toward the bottom dead center among the working chambers 93 (C0 to C5) of the hydraulic motor 14. The high-pressure valves 96 corresponding to the respective working chambers 93 (C0 to C5) receive the control signal at time t₆.

Then, on or after time t₆, for each of the working chambers 93 (C4, C5, C0) whose piston 92 is moving downward from the top dead center toward the bottom dead center, supply of exciting current to the high-pressure valve 96 is halted and the high-pressure valve 96 is closed after waiting until the exciting current to the high-pressure valve 96 falls below a threshold value. In accordance with closure of the high-pressure valve 96, the torque generated in each working chamber 93 (C4, C5, C0) decreases at once (the dotted section of the graph in FIG. 7).

Further, for each of the working chambers (C1 to C3) whose high-pressure valve 96 is not supplied with exciting current at time t₅ when the failure event of the grid is detected, on or after time t₅ and at least until the decrease in the grid voltage recovers, exciting current is not supplied to the high-pressure valve 96 and the low-pressure valve 98, and the high-pressure valve 96 having been once closed is kept closed, and the low-pressure valve 98 having been once opened is kept open.

In this way, from time t₆ to t₈, the sum of torque generated by the hydraulic motor 14 as a whole quickly decreases. As a result, time required to reduce the torque is shortened to the period from t6 to t8, which is shorter than in a case where, for the working chambers 93 (C4, C5, C0) with the piston 92 in the descending stroke, each of the working chambers 93 (C4, C5, C0) is caused to be in the inactive state after waiting for the next decision point to come when the failure of the grid is detected, and the sum of the torque generated by the hydraulic motor 14 as a whole decreases from time t7 to t9 (the solid-line section of C4, C5, C0 in FIG. 7).

If a failure event occurs such that the grid voltage instantly decreases to a value larger than zero, the high-pressure valve is closed while the piston moves downward as described above for a part or all of the active cylinders while the grid voltage is decreasing, which makes it possible to reduce the motor torque immediately and to prevent step out of the synchronous generator 20. Thus, the wind turbine generator 1 can continue operation while being connected to the grid 50. That is, it is possible to make the wind turbine generator 1 applicable to Low Voltage Ride Through (LVRT).

Further, if a failure event occurs such that the grid voltage instantly decreases to zero, the high-pressure valve is closed while the piston moves downward as described above for all of the active cylinders while the grid voltage is decreasing, which makes it possible to reduce the motor torque immediately to approximately zero and to prevent step out of the synchronous generator 20. Thus, the wind turbine generator 1 can continue operation while being connected to the grid 50. That is, it is possible to make the wind turbine generator 1 applicable to Zero Voltage Ride Through (ZVRT).

When a failure event occurs in the grid 50 such that causes voltage reduction of the grid 50, the terminal voltage of the synchronous generator 20 decreases instantly, accompanied by an instant decrease of the electrical output (active power) of the synchronous generator 20. Thus, the mechanical input from the hydraulic motor 14 becomes excessive with respect to the electrical output of the synchronous generator 20. As a result, the rotator of the synchronous generator 20 is accelerated, which may cause the synchronous generator 20 to step out.

In view of this, in one embodiment, when a failure event of the grid 50 is detected by the transmission control part 40, the exciter controller 110 increases the field current supplied to the field winding of the synchronous generator 20 immediately after voltage reduction in the grid 50, in addition to controlling the high-pressure valve 96 of the hydraulic motor 14 as described above.

In this way, the internal induced voltage of the generator increases, thereby increasing the electrical output of the synchronous generator 20. Thus, the synchronizing force of the synchronous generator 20 increases so that the first wave swing of the synchronous generator 20 after occurrence of the failure event is suppressed, thereby improving the transitional stability. Thus, it is possible to prevent step out of the synchronous generator 20 even more effectively.

Such control of the exciter 100 for improving the transitional stability can be suitably achieved by an excitation method (e.g. thyristor excitation method) with an extremely-high response speed, which is called an ultra-quick response excitation method.

Embodiments of the present invention were described in detail above, but the present invention is not limited thereto, and various amendments and modifications may be implemented while remaining within the scope of the present application.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A power generating apparatus of renewable energy type (1), comprising:
a rotor (2) configured to rotate by renewable energy,
a hydraulic pump (12) configured to be driven by the rotor to pressurize working fluid,
a hydraulic motor (14) configured to be driven by the working fluid from the hydraulic pump (12),
a high-pressure fluid line (16) connecting an outlet of the hydraulic pump (12) and an inlet of the hydraulic motor (14) and configured to supply the hydraulic motor (14) with the working fluid pressurized by the hydraulic pump (12),
a low pressure fluid line (18) connecting an outlet of the hydraulic motor (14) and an inlet of the hydraulic pump (12) and configured to return the working fluid having flown through the hydraulic motor (14) to the hydraulic pump (12),
a generator connected (20) to a grid (50) and configured to be driven by the hydraulic motor (14), and
a motor controller (48) for controlling the hydraulic motor (14),
wherein the hydraulic motor (14) includes:
a rotatable shaft (15),
a plurality of pistons (92) configured to reciprocate in conjunction with the rotatable shaft (15),
a plurality of cylinders (90) forming a plurality of working chambers (93) together with the plurality of pistons (92),
a high-pressure valve (96) for switching a communication state between each of the working chambers (93) and the high-pressure fluid line, and
a low-pressure valve (98) for switching a communication state between each of the working chambers (93) and the low pressure fluid line (18),
wherein the motor controller (48) is configured to close the high-pressure valve (96), for at least one of the working chambers (93) corresponding to at least one piston (92) moving downward from a top dead center toward a bottom dead center among the plurality of pistons (92), before the at least one piston (92) moving downward reaches the bottom dead center, at the time of occurrence of a failure event of the grid (50),
**characterised in that**
the high-pressure valve (96) is a normally-closed solenoid valve, and **in that** the motor controller (48) is configured to stop supplying the high-pressure valve (96) with exciting current, after the exciting current supplied to the high-pressure valve (96) or the sum of the exciting current supplied to the high-pressure valve (96) and exciting current supplied to the low-pressure valve (98) becomes not greater than a threshold value, at the time of occurrence of a failure event of the grid (50).

2. The power generating apparatus of renewable energy type (1) according to claim 1, wherein the motor controller (48) is configured so that:
during normal operation of the grid (50), each time when at least one decision point that is set within a period of one revolution of the rotatable shaft (15) comes, the motor controller (48) decides whether to cause the working chamber (93) corresponding to the decision point to be in an active state or an inactive state,
for the working chamber (93) decided to be in the active state, opens the high-pressure valve (96) while the piston (92) is moving downward from the top dead center toward the bottom dead center, and
for the working chamber (93) decided to be in the inactive state, keeps the high-pressure valve closed (96) while the piston (92) is moving downward from the top dead center toward the bottom dead center; and
at the time of occurrence of a failure event of the grid (50), for the working chamber (93) decided to be in the active state at the most recent decision point, the motor controller (48) closes the high-pressure valve (96) before the piston (92) moving downward reaches the bottom dead center without waiting for the next decision point.

3. The power generating apparatus of renewable energy type (1) according to claim 2, wherein the motor controller (48) is configured to decide, at the time of occurrence of a failure event of the grid (50), to cause the working chamber (93) to be in the inactive state at the next decision point, and to keep the high-pressure valve closed (96).

4. The power generating apparatus of renewable energy type (1) according to claim 3, wherein the motor controller (48) is configured to keep, at the time of occurrence of a failure event of the grid (50), the low-pressure valve (98) open at the next decision point so that the working chamber (93) is in the inactive state.

5. The power generating apparatus of renewable energy type (1) according to any one of claims 1 to 4, wherein
the low-pressure valve (98) is a normally-open solenoid valve, and
the motor controller (48) is configured to stop supplying the low-pressure valve (98) with exciting current, at the time of occurrence of a failure event of the grid (50).

6. The power generating apparatus of renewable energy type (1) according to any one of claims 1 to 5, further comprising:
a grid voltage measuring part (53) for measuring a voltage of the grid (50), and
a communication line (54) for transmitting a signal representing a measurement result by the grid voltage measuring part (53) to the motor controller (48), the communication line (54) being provided as at least a part of a wiring between the grid voltage measuring part (54) and the motor controller (48).

7. The power generating apparatus of renewable energy type (1) according to claim 6, further comprising a superordinate controller (42) for sending a command to the motor controller (48), wherein
the motor controller (48) is configured
to control the hydraulic motor (14) on the basis of the command from the superordinate controller (48) during normal operation of the grid (50), and
to receive the signal directly from the grid voltage measuring part (53) via the communication line (54) and not via the superordinate controller (42), and control the hydraulic motor (14) on the basis of the signal, at the time of occurrence of a failure event of the grid (50).

8. The power generating apparatus of renewable energy type (1) according to any one of claims 1 to 7, further comprising:
an exciter (100) for supplying a field winding (21) of the generator with a field current, and
an exciter controlling unit (110) for controlling the exciter (100),
wherein the exciter controlling unit is configured to increase the field current immediately after voltage reduction of the grid (50).

9. The power generating apparatus of renewable energy type (1) according to any one of claims 1 to 8, wherein the failure event is a situation such that the voltage of the grid (50) is reduced to not more than a prescribed voltage in a grid code.

10. The power generating apparatus of renewable energy type (1) according to any one of claims 1 to 9, which is a wind turbine power generating apparatus (1) configured to generate electric power from wind as the renewable energy.

11. A motor controller (48) for controlling the hydraulic motor of the power generating apparatus of renewable energy type (1) according to any one of claims 1 to 10,
which is configured to close the high-pressure valve (96), for at least one of the working chambers (93) corresponding to at least one piston (92) moving downward from a top dead center toward a bottom dead center among the plurality of pistons (92), before the at least one piston (92) moving downward reaches the bottom dead center, at the time of occurrence of a failure event of the grid (50),
wherein the high-pressure valve (96) is a normally-closed solenoid valve, and wherein the motor controller (48) is configured to stop supplying the high-pressure valve (96) with exciting current, after the exciting current supplied to the high-pressure valve (96) or the sum of the exciting current supplied to the high-pressure valve (96) and exciting current supplied to the low-pressure valve (98) becomes not greater than a threshold value, at the time of occurrence of a failure event of the grid (50).

12. Method of operating a power generating apparatus of renewable energy type (1), comprising:
a rotor (2) configured to rotate by renewable energy,
a hydraulic pump (12) configured to be driven by the rotor (2) to pressurize working fluid,
a hydraulic motor (14) configured to be driven by the working fluid from the hydraulic pump (12),
a high-pressure fluid line (16) connecting an outlet of the hydraulic pump (12) and an inlet of the hydraulic motor (14) and configured to supply the hydraulic motor (14) with the working fluid pressurized by the hydraulic pump (12),
a low pressure fluid line (18) connecting an outlet of the hydraulic motor (14) and an inlet of the hydraulic pump (12) and configured to return the working fluid having flown through the hydraulic motor (14) to the hydraulic pump (12), and
a generator (20) connected to a grid (50) and configured to be driven by the hydraulic motor (14);
wherein the hydraulic motor (14) includes:
a rotatable shaft (15),
a plurality of pistons (92) configured to reciprocate in conjunction with the rotatable shaft (15),
a plurality of cylinders (91) forming a plurality of working chambers (93) together with the plurality of pistons (92),
a high-pressure valve (96) for switching a communication state between each of the working chamber (93) and the high-pressure fluid line (16), and
a low-pressure valve (98) for switching a communication state between each of the working chamber (93) and the low pressure fluid line (18);
wherein the high-pressure valve (96) is a normally-closed solenoid valve,
wherein the method comprises a step of closing the high-pressure valve (96), for at least one of the working chambers (93) corresponding to at least one piston (92) moving downward from a top dead center toward a bottom dead center among the plurality of pistons (92), before the at least one piston (92) moving downward reaches the bottom dead center, at the time of occurrence of a failure event of the grid (50), and
wherein the step of closing the high-pressure valve comprises stopping supplying the high-pressure valve (96) with exciting current, after the exciting current supplied to the high-pressure valve (96) or the sum of the exciting current supplied to the high-pressure valve (96) and exciting current supplied to the low-pressure valve (98) becomes not greater than a threshold value, at the time of occurrence of a failure event of the grid (50).

## Patentansprüche

1. Mit erneuerbarer Energie arbeitende Energieerzeugungsvorrichtung (1), umfassend:
einen Rotor (2), der dafür konfiguriert ist, sich durch erneuerbare Energie zu drehen,
eine Hydraulikpumpe (12), die dafür konfiguriert ist, durch den Rotor angetrieben zu werden, um ein Arbeitsfluid mit Druck zu beaufschlagen,
einen Hydraulikmotor (14), der dafür konfiguriert ist, durch das Arbeitsfluid von der Hydraulikpumpe (12) angetrieben zu werden,
eine Hochdruckfluidleitung (16), die einen Auslass der Hydraulikpumpe (12) und einen Einlass des Hydraulikmotors (14) verbindet und dafür konfiguriert ist, dem Hydraulikmotor (14) das Arbeitsfluid zuzuführen, das durch die Hydraulikpumpe (12) mit Druck beaufschlagt wurde,
eine Niederdruckfluidleitung (18), die einen Auslass des Hydraulikmotors (14) und einen Einlass der Hydraulikpumpe (12) verbindet und dafür konfiguriert ist, das Arbeitsfluid, nachdem es durch den Hydraulikmotor (14) geströmt ist, zu der Hydraulikpumpe (12) zurückzuführen,
einen Generator (20), der mit einem Energienetz (50) verbunden ist und dafür konfiguriert ist, durch den Hydraulikmotor (14) angetrieben zu werden, und
eine Motorsteuereinheit (48) zum Steuern des Hydraulikmotors (14),
wobei der Hydraulikmotor (14) enthält:
eine drehbare Welle (15),
mehrere Kolben (92), die dafür konfiguriert sind, in Verbindung mit der drehbaren Welle (15) eine Hubbewegung zu vollführen,
mehrere Zylinder (90), die zusammen mit den mehreren Kolben (92) mehrere Arbeitskammern (93) bilden,
ein Hochdruckventil (96) zum Schalten eines Kommunikationszustands zwischen jeder der Arbeitskammern (93) und der Hochdruckfluidleitung, und
ein Niederdruckventil (98) zum Schalten eines Kommunikationszustands zwischen jeder der Arbeitskammern (93) und der Niederdruckfluidleitung (18),
wobei die Motorsteuereinheit (48) dafür konfiguriert ist, zum Zeitpunkt des Eintretens eines Ausfallereignisses des Energienetzes (50) das Hochdruckventil (96) für mindestens eine der Arbeitskammern (93), die mindestens einem Kolben (92), der sich von einem oberen Totpunkt in Richtung eines unteren Totpunktes abwärts bewegt, unter den mehreren Kolben (92) entspricht, zu schließen, bevor der mindestens eine Kolben (92), der sich abwärts bewegt, den unteren Totpunkt erreicht,
**dadurch gekennzeichnet, dass** das Hochdruckventil (96) ein Öffnungs-Solenoidventil ist, und dadurch, dass die Motorsteuereinheit (48) dafür konfiguriert ist, dem Hochdruckventil (96) zum Zeitpunkt des Eintretens eines Ausfallereignisses des Energienetzes (50) keinen Erregungsstrom mehr zuzuführen, nachdem der dem Hochdruckventil (96) zugeführte Erregungsstrom oder die Summe des dem Hochdruckventil (96) zugeführten Erregungsstroms und des dem Niederdruckventil (98) zugeführten Erregungsstroms nicht größer wird als ein Schwellenwert.

2. Mit erneuerbarer Energie arbeitende Energieerzeugungsvorrichtung (1) nach Anspruch 1, wobei die Motorsteuereinheit (48) so konfiguriert ist, dass:
während des normalen Betriebes des Energienetzes (50) jedes Mal, wenn mindestens ein Entscheidungspunkt kommt, der innerhalb eines Zeitraums einer Umdrehung der drehbaren Welle (15) eingestellt ist, die Motorsteuereinheit (48) entscheidet, ob die Arbeitskammer (93), die dem Entscheidungspunkt entspricht, in einen aktiven Zustand oder einen inaktiven Zustand versetzt werden soll,
für die Arbeitskammer (93), zu der entschieden wurde, dass sie sich im aktiven Zustand befinden soll, das Hochdruckventil (96) geöffnet wird, während sich der Kolben (92) von dem oberen Totpunkt in Richtung des unteren Totpunktes abwärts bewegt, und
für die Arbeitskammer (93), zu der entschieden wurde, dass sie sich im inaktiven Zustand befinden soll, das Hochdruckventil (96) geschlossen gehalten wird, während sich der Kolben (92) von dem oberen Totpunkt in Richtung des unteren Totpunktes abwärts bewegt, und
die Motorsteuereinheit (48), zum Zeitpunkt des Eintretens eines Ausfallereignisses des Energienetzes (50), für die Arbeitskammer (93), zu der entschieden wurde, dass sie sich am jüngsten Entscheidungspunkt im aktiven Zustand befinden soll, das Hochdruckventil (96) schließt, bevor der Kolben (92), der sich abwärts bewegt, den unteren Totpunkt erreicht, ohne auf den nächsten Entscheidungspunkt zu warten.

3. Mit erneuerbarer Energie arbeitende Energieerzeugungsvorrichtung (1) nach Anspruch 2, wobei die Motorsteuereinheit (48) dafür konfiguriert ist, zum Zeitpunkt des Eintretens eines Ausfallereignisses des Energienetzes (50) zu entscheiden, die Arbeitskammer (93) am nächsten Entscheidungspunkt in den inaktiven Zustand zu versetzen und das Hochdruckventil (96) geschlossen zu halten.

4. Mit erneuerbarer Energie arbeitende Energieerzeugungsvorrichtung (1) nach Anspruch 3, wobei die Motorsteuereinheit (48) dafür konfiguriert ist, zum Zeitpunkt des Eintretens eines Ausfallereignisses des Energienetzes (50) das Niederdruckventil (98) am nächsten Entscheidungspunkt offen zu halten, so dass die Arbeitskammer (93) im inaktiven Zustand ist.

5. Mit erneuerbarer Energie arbeitende Energieerzeugungsvorrichtung (1) nach einem der Ansprüche 1 bis 4, wobei
das Niederdruckventil (98) ein Schließ-Solenoidventil ist und
die Motorsteuereinheit (48) dafür konfiguriert ist, zum Zeitpunkt des Eintretens eines Ausfallereignisses des Energienetzes (50) dem Niederdruckventil (98) keinen Erregungsstrom mehr zuzuführen.

6. Mit erneuerbarer Energie arbeitende Energieerzeugungsvorrichtung (1) nach einem der Ansprüche 1 bis 5, ferner umfassend:
einen Energienetzspannungs-Messungsteil (53) zum Messen einer Spannung des Energienetzes (50) und
eine Kommunikationsleitung (54) zum Senden eines Signals, das ein Messergebnis darstellt, durch den Energienetzspannungs-Messungsteil (53) an die Motorsteuereinheit (48), wobei die Kommunikationsleitung (54) als mindestens ein Teil einer Verdrahtung zwischen dem Energienetzspannungs-Messungsteil (54) und der Motorsteuereinheit (48) bereitgestellt ist.

7. Mit erneuerbarer Energie arbeitende Energieerzeugungsvorrichtung (1) nach Anspruch 6, die ferner eine übergeordnete Steuereinheit (42) umfasst, um einen Befehl an die Motorsteuereinheit (48) zu senden,
wobei die Motorsteuereinheit (48) dafür konfiguriert ist,
den Hydraulikmotor (14) auf der Basis des Befehls von der übergeordneten Steuereinheit (48) während des normalen Betriebes des Energienetzes (50) zu steuern, und
das Signal zum Zeitpunkt des Eintretens eines Ausfallereignisses des Energienetzes (50) direkt von dem Energienetzspannungs-Messungsteil (53) über die Kommunikationsleitung (54) und nicht über die übergeordnete Steuereinheit (42) zu empfangen und den Hydraulikmotor (14) auf der Basis des Signals zu steuern.

8. Mit erneuerbarer Energie arbeitende Energieerzeugungsvorrichtung (1) nach einem der Ansprüche 1 bis 7, ferner umfassend:
einen Erreger (100) zum Versorgen einer Feldwicklung (21) des Generators mit einem Feldstrom und
eine Erreger-Steuerungseinheit (110) zum Steuern des Erregers (100),
wobei die Erreger-Steuerungseinheit dafür konfiguriert ist, den Feldstrom unmittelbar nach der Spannungsreduzierung des Energienetzes (50) zu erhöhen.

9. Mit erneuerbarer Energie arbeitende Energieerzeugungsvorrichtung (1) nach einem der Ansprüche 1 bis 8, wobei das Ausfallereignis eine Situation ist, bei der die Spannung des Energienetzes (50) auf maximal eine in einer Energienetzvorschrift vorgeschriebene Spannung reduziert wird.

10. Mit erneuerbarer Energie arbeitende Energieerzeugungsvorrichtung (1) nach einem der Ansprüche 1 bis 9, die eine Windenergieerzeugungsvorrichtung (1) ist, die dafür konfiguriert ist, elektrische Energie aus Wind als der erneuerbaren Energie zu erzeugen.

11. Motorsteuereinheit (48) zum Steuern des Hydraulikmotors der mit erneuerbarer Energie arbeitenden Energieerzeugungsvorrichtung (1) nach einem der Ansprüche 1 bis 10,
die dafür konfiguriert ist, das Hochdruckventil (96) zum Zeitpunkt des Eintretens eines Ausfallereignisses des Energienetzes (50) für mindestens eine der Arbeitskammern (93), die mindestens einem Kolben (92), der sich von einem oberen Totpunkt in Richtung eines unteren Totpunktes abwärts bewegt, unter den mehreren Kolben (92) entspricht, zu schließen, bevor der mindestens eine Kolben (92), der sich abwärts bewegt, den unteren Totpunkt erreicht,
wobei das Hochdruckventil (96) ein Öffnungs-Solenoidventil ist, und wobei die Motorsteuereinheit (48) dafür konfiguriert ist, dem Hochdruckventil (96) zum Zeitpunkt des Eintretens eines Ausfallereignisses des Energienetzes (50) keinen Erregungsstrom mehr zuzuführen, nachdem der dem Hochdruckventil (96) zugeführte Erregungsstrom oder die Summe des dem Hochdruckventil (96) zugeführten Erregungsstroms und des dem Niederdruckventil (98) zugeführten Erregungsstroms nicht größer wird als eine Schwellenwert.

12. Verfahren zum Betreiben einer mit erneuerbarer Energie arbeitenden Energieerzeugungsvorrichtung (1), umfassend:
einen Rotor (2), der dafür konfiguriert ist, sich durch erneuerbare Energie zu drehen,
eine Hydraulikpumpe (12), die dafür konfiguriert ist, durch den Rotor (2) angetrieben zu werden, um ein Arbeitsfluid mit Druck zu beaufschlagen,
einen Hydraulikmotor (14), der dafür konfiguriert ist, durch das Arbeitsfluid von der Hydraulikpumpe (12) angetrieben zu werden,
eine Hochdruckfluidleitung (16), die einen Auslass der Hydraulikpumpe (12) und einen Einlass des Hydraulikmotors (14) verbindet und dafür konfiguriert ist, dem Hydraulikmotor (14) das Arbeitsfluid zuzuführen, das durch die Hydraulikpumpe (12) mit Druck beaufschlagt wurde,
eine Niederdruckfluidleitung (18), die einen Auslass des Hydraulikmotors (14) und einen Einlass der Hydraulikpumpe (12) verbindet und dafür konfiguriert ist, das Arbeitsfluid, nachdem es durch den Hydraulikmotor (14) geströmt ist, zu der Hydraulikpumpe (12) zurückzuführen, und
einen Generator (20), der mit einem Energienetz (50) verbunden ist und dafür konfiguriert ist, durch den Hydraulikmotor (14) angetrieben zu werden;
wobei der Hydraulikmotor (14) enthält:
eine drehbare Welle (15),
mehrere Kolben (92), die dafür konfiguriert sind, in Verbindung mit der drehbaren Welle (15) eine Hubbewegung zu vollführen,
mehrere Zylinder (91), die zusammen mit den mehreren Kolben (92) mehrere Arbeitskammern (93) bilden,
ein Hochdruckventil (96) zum Schalten eines Kommunikationszustands zwischen jeder der Arbeitskammer (93) und der Hochdruckfluidleitung (16) und
ein Niederdruckventil (98) zum Schalten eines Kommunikationszustands zwischen jeder der Arbeitskammer (93) und der Niederdruckfluidleitung (18),
wobei das Hochdruckventil (96) ein Öffnungs-Solenoidventil ist,
wobei das Verfahren einen Schritt umfasst, um zum Zeitpunkt des Eintretens eines Ausfallereignisses des Energienetzes (50) das Hochdruckventil (96) für mindestens eine der Arbeitskammern (93), die mindestens einem Kolben (92), der sich von einem oberen Totpunkt in Richtung eines unteren Totpunktes abwärts bewegt, unter den mehreren Kolben (92) entspricht, zu schließen, bevor der mindestens eine Kolben (92), der sich abwärts bewegt, den unteren Totpunkt erreicht, und
wobei der Schritt des Schließens des Hochdruckventils umfasst, das Versorgen des Hochdruckventils (96) mit Erregungsstrom zum Zeitpunkt des Eintretens eines Ausfallereignisses des Energienetzes (50) das Hochdruckventil (96) zu stoppen, nachdem der dem Hochdruckventil (96) zugeführte Erregungsstrom oder die Summe des dem Hochdruckventil (96) zugeführten Erregungsstroms und des dem Niederdruckventil (98) zugeführten Erregungsstroms nicht größer wird als ein Schwellenwert.

## Revendications

1. Appareil de génération de puissance de type à énergie renouvelable (1) comprenant :
un rotor (2) configuré pour tourner grâce à l'énergie renouvelable,
une pompe hydraulique (12) configurée pour être entraînée par le rotor afin de mettre sous pression le fluide de travail,
un moteur hydraulique (14) configuré pour être entraîné par le fluide de travail délivré par la pompe hydraulique (12),
une ligne de fluide haute pression (16) raccordant une sortie de la pompe hydraulique (12) et une entrée du moteur hydraulique (14) et configurée pour alimenter le moteur hydraulique (14) avec le fluide de travail mis sous pression par la pompe hydraulique (12),
une ligne de fluide basse pression (18) raccordant une sortie du moteur hydraulique (14) et une entrée de la pompe hydraulique (12) et configurée pour ramener le fluide de travail qui s'est écoulé dans le moteur hydraulique (14) à la pompe hydraulique (12),
un générateur (20) raccordé à un réseau (50) et configuré pour être entraîné par le moteur hydraulique (14), et
un organe de commande de moteur (48) pour commander le moteur hydraulique (14),
dans lequel le moteur hydraulique (14) comprend :
un arbre rotatif (15),
une pluralité de pistons (92) configurés pour effectuer un mouvement de va-et-vient conjointement avec l'arbre rotatif (15),
une pluralité de cylindres (90) formant une pluralité de chambres de travail (93) conjointement avec la pluralité de pistons (92),
une valve haute pression (96) pour commuter un état de communication entre chacune des chambres de travail (93) et la ligne de fluide haute pression, et
une valve basse pression (98) pour commuter un état de communication entre chacune des chambres de travail (93) et la ligne de fluide basse pression (18),
dans lequel l'organe de commande de moteur (48) est configuré pour fermer la valve haute pression (96), pour au moins l'une des chambres de travail (93) correspondant à au moins un piston (92) se déplaçant vers le bas, d'un point mort haut vers un point mort bas parmi la pluralité de pistons (92), avant que le au moins un piston (92) se déplaçant vers le bas n'atteigne le pont mort bas, au moment de l'occurrence d'un événement de défaillance du réseau (50), **caractérisé en ce que** :
la valve haute pression (96) est une électrovanne normalement fermée, et
**en ce que** l'organe de commande de moteur (48) est configuré pour arrêter d'alimenter la valve haute pression (96) avec le courant d'excitation, après que le courant d'excitation fourni à la valve haute pression (96) ou la somme du courant d'excitation fourni à la valve haute pression (96) et du courant d'excitation fourni à la valve basse pression (98) est devenu(e) non supérieur(e) à une valeur de seuil, au moment de l'occurrence d'un événement de défaillance du réseau (50).

2. Appareil de génération de puissance de type à énergie renouvelable (1) selon la revendication 1, dans lequel l'organe de commande de moteur (48) est configuré de sorte que :
pendant le fonctionnement normal du réseau (50), chaque fois qu'au moins un point de décision qui est déterminé dans une période d'une révolution de l'arbre rotatif (15) a lieu, l'organe de commande de moteur (48) décide s'il faut amener la chambre de travail (93) correspondante au point de décision pour être dans un état actif ou un état inactif,
pour la chambre de travail (93) que l'on a mis à l'état actif, ouvre la valve haute pression (96) alors que le piston (92) se déplace vers le bas du point mort haut vers le point mort bas, et
pour la chambre de travail (93) que l'on a mis à l'état inactif, maintient la valve haute pression (96) fermée, alors que le piston (92) se déplace du bas du point mort haut vers le point mort bas ; et
au moment de l'occurrence d'un événement de défaillance du réseau (50), pour la chambre de travail (93) que l'on a mis à l'état actif au point de décision le plus récent, l'organe de commande de moteur (48) ferme la valve haute pression (96) avant que le piston (92) qui se déplace vers le bas, n'atteigne le point mort bas sans attendre le point de décision suivant.

3. Appareil de génération de puissance de type à énergie renouvelable (1) selon la revendication 2, dans lequel l'organe de commande de moteur (48) est configuré pour décider, au moment de l'occurrence d'un événement de défaillance du réseau (50), d'amener la chambre de travail (93) à être à l'état inactif au point de décision suivant, et de maintenir la valve haute pression (96) fermée.

4. Appareil de génération de puissance de type à énergie renouvelable (1) selon la revendication 3, dans lequel l'organe de commande de moteur (48) est configuré pour maintenir, au moment de l'occurrence d'un événement de défaillance du réseau (50), la valve basse pression (98) ouverte au point de décision suivant, de sorte que la chambre de travail (93) est à l'état inactif.

5. Appareil de génération de puissance de type à énergie renouvelable (1) selon l'une quelconque des revendications 1 à 4, dans lequel :
la valve basse pression (98) est une électrovanne normalement ouverte, et
l'organe de commande de moteur (48) est configuré pour arrêter l'alimentation de la valve basse pression (98) avec le courant d'excitation, au moment de l'occurrence d'un événement de défaillance du réseau (50).

6. Appareil de génération de puissance de type à énergie renouvelable (1) selon l'une quelconque des revendications 1 à 5, comprenant en outre :
une partie de mesure de tension de réseau (53) pour mesurer une tension du réseau (50), et
une ligne de communication (54) pour transmettre un signal représentant un résultat de mesure par la partie de mesure de tension de réseau (53) à l'organe de commande de moteur (48), la ligne de communication (54) étant prévue comme étant au moins une partie d'un câblage entre la partie de mesure de tension de grille (54) et l'organe de commande de moteur (48).

7. Appareil de génération de puissance de type à énergie renouvelable (1) selon la revendication 6, comprenant en outre un organe de commande subordonné (42) pour envoyer une commande à l'organe de commande de moteur (48), dans lequel :
l'organe de commande de moteur (48) est configuré :
pour commander le moteur hydraulique (14) sur la base de la commande provenant de l'organe de commande subordonné (48) pendant le fonctionnement normal du réseau (50), et
pour recevoir le signal directement de la partie de mesure de tension de réseau (53) via la ligne de communication (54) et pas via l'organe de commande subordonné (42) et commander le moteur hydraulique (14) sur la base du signal, au moment de l'occurrence d'un événement de défaillance du réseau (50).

8. Appareil de génération de puissance de type à énergie renouvelable (1) selon l'une quelconque des revendications 1 à 7, comprenant en outre :
un dispositif d'excitation (100) pour fournir un enroulement de champ (21) du générateur avec un courant de champ, et
une unité de commande de dispositif d'excitation (110) pour commander le dispositif d'excitation (100),
dans lequel l'unité de commande de dispositif d'excitation est configurée pour augmenter le courant de champ immédiatement après la réduction de tension du réseau (50).

9. Appareil de génération de puissance de type à énergie renouvelable (1) selon l'une quelconque des revendications 1 à 8, dans lequel l'événement de défaillance est une situation telle que la tension du réseau (50) est réduite à une valeur non supérieure à une tension prédéterminée dans un code de réseau.

10. Appareil de génération de puissance de type à énergie renouvelable (1) selon l'une quelconque des revendications 1 à 9, qui est un appareil de génération de puissance d'éolienne (1) configuré pour générer l'énergie électrique du vent en tant qu'énergie renouvelable.

11. Organe de commande de moteur (48) pour commander le moteur hydraulique de l'appareil de génération de puissance de type à énergie renouvelable (1) selon l'une quelconque des revendications 1 à 10,
qui est configuré pour fermer la valve haute pression (96), pour au moins l'une des chambres de travail (93) correspondant à au moins un piston (92) se déplaçant vers le bas, du point mort haut vers un point mort bas parmi la pluralité de pistons (92), avant que le au moins un piston (92) se déplaçant vers le bas n'atteigne le point mort bas, au moment de l'occurrence d'un événement de défaillance du réseau (50),
dans lequel la valve haute pression (96) est une électrovanne normalement fermée, et dans lequel l'organe de commande de moteur (48) est configuré pour arrêter l'alimentation de la valve haute pression (96) avec du courant d'excitation, après que le courant d'excitation fourni à la valve haute pression (96) ou la somme du courant d'excitation fourni à la valve haute pression (96) et du courant d'excitation fourni à la valve basse pression (98) est devenu(e) non supérieur(e) à une valeur de seuil, au moment de l'occurrence d'un événement de défaillance du réseau (50).

12. Procédé pour actionner un appareil de génération de puissance de type à énergie renouvelable (1), comprenant :
un rotor (2) configuré pour tourner grâce à l'énergie renouvelable,
une pompe hydraulique (12) configurée pour être entraînée par le rotor (2) pour mettre sous pression le fluide de travail,
un moteur hydraulique (14) configuré pour être entraîné par le fluide de travail provenant de la pompe hydraulique (12),
une ligne de fluide haute pression (16) raccordant une sortie de la pompe hydraulique (12) et une entrée du moteur hydraulique (14) et configurée pour alimenter le moteur hydraulique (14) avec le fluide de travail mis sous pression par la pompe hydraulique (12),
une ligne de fluide basse pression (18) raccordant une sortie du moteur hydraulique (14) et une entrée de la pompe hydraulique (12) et configurée pour ramener le fluide de travail qui s'est écoulé dans le moteur hydraulique (14) à la pompe hydraulique (12), et
un générateur (20) raccordé à un réseau (50) et configuré pour être entraîné par le moteur hydraulique (14) ;
dans lequel le moteur hydraulique (14) comprend :
un arbre rotatif (15),
une pluralité de pistons (92) configurés pour effectuer un mouvement de va-et-vient avec l'arbre rotatif (15),
une pluralité de cylindres (91) formant une pluralité de chambres de travail (93) conjointement avec la pluralité de pistons (92),
une valve haute pression (96) pour commuter un état de communication entre chacune des chambres de travail (93) et la ligne de fluide haute pression (16), et
une valve basse pression (98) pour commuter un état de communication entre chacune des chambres de travail (93) et la ligne de fluide basse pression (18) ;
dans lequel la valve haute pression (96) est une électrovanne normalement fermée,
dans lequel le procédé comprend une étape consistant à fermer une valve haute pression (96), pour au moins l'une des chambres de travail (93) correspondant à au moins un piston (92) se déplaçant vers le bas, du point mort haut vers un point mort bas parmi la pluralité de pistons (92), avant que le au moins un piston (92) se déplaçant vers le bas n'atteigne le point mort bas, au moment de l'occurrence d'un événement de défaillance du réseau (50), et
dans lequel l'étape consistant à fermer la valve haute pression comprend l'étape consistant à arrêter l'alimentation de la valve haute pression (96) avec le courant d'excitation, après que le courant d'excitation fourni à la valve haute pression (96) ou la somme du courant d'excitation fourni à la valve haute pression (96) et du courant d'excitation fourni à la valve basse pression (98) est devenu(e) non supérieur(e) à une valeur de seuil, au moment de l'occurrence d'un événement de défaillance du réseau (50).
